# EUROPEAN PATENT SPECIFICATION

(11) **EP 4 700 557 B1**
(45) Date of publication and mention of the grant of the patent: **13.05.2026**
(21) Application number: 25156114.8
(22) Date of filing: 05.02.2025
(51) Int. Cl.: G06F 3/06, G06F 21/55, G06F 12/14, G06F 16/13, G06F 16/172, G06F 21/56

(54) **RANSOMWARE RECOVERY FOR NVME-OF SSD**
RANSOMWARE-WIEDERHERSTELLUNG FÜR NVME-OF-STMS
RÉCUPÉRATION DE RANSOMWARE POUR NVME DE SSD

(30) Priority: 22.08.2024 US 202418812111
(43) Date of publication of application: 25.02.2026
(73) Proprietor: Samsung Electronics Co., Ltd., Suwon-si, Gyeonggi-do 16677 (KR)
(72) Inventor: BLAICHMAN, Evgeny, 16677 Suwon-si (KR); BERMAN, Amit, 16677 Suwon-si (KR); SHABO, Reut, 16677 Suwon-si (KR)
(74) Representative: Marks & Clerk LLP

(56) References cited:
- US-A1- 2006 230 455
- US-A1- 2019 243 728
- US-B1- 12 058 169
- BAEK SUNGHA ET AL: "SSD-Insider: Internal Defense of Solid-State Drive against Ransomware with Perfect Data Recovery", 2018 IEEE 38TH INTERNATIONAL CONFERENCE ON DISTRIBUTED COMPUTING SYSTEMS (ICDCS), IEEE, 2 July 2018 (2018-07-02), pages 875 - 884, XP033375939, DOI: 10.1109/ICDCS.2018.00089

## Description

### BACKGROUND

Ransomware is a type of malware that encodes data targeted for attack and demands money in exchange for an encryption key necessary for decrypting the encrypted data. Ransomware has become a risk factor that causes enormous financial and social losses. Accordingly, there are measures that allow a storage device to cope with the ransomware attack.

Ransomware viruses read data from the system and encrypt it, then write the encrypted data to the same place. Any storage system may be vulnerable to a ransomware virus.

Non-volatile memory express (NVMe)-over fabrics (of) is a protocol specification designed to connect hosts to storage across a network fabric using the NVMe network protocol.

US 12058169 B1 discloses techniques for monitoring and analyzing input/output (I/O) messages for patterns indicative of ransomware attacks affecting computer systems of a cloud provider, and for performing various remediation actions to mitigate data loss once a potential ransomware attack is detected. The monitoring of I/O activity for such patterns is performed at least in part by I/O proxy devices coupled to computer systems of a cloud provider network, where an I/O proxy device is interposed in the I/O path between guest operating systems running on a computer system and storage devices to which I/O messages are destined. An I/O proxy device can analyze I/O messages for patterns indicative of potential ransomware attacks by monitoring for anomalous I/O patterns which may, e.g., be indicative of a malicious process attempting to encrypt or otherwise render in accessible a significant portion of one or more storage volumes as part of a ransomware attack.

### SUMMARY

Herein is provided a storage system according to claim 1 and a computer-implemented method for restoring data in a storage system according to claim 12. Some example embodiments of the inventive concepts described herein relate to a method and an apparatus for early detection of a ransomware attack in a non-volatile memory express-over fabrics (NVMe-oF) storage system.

According to some example embodiments, a storage system includes processing circuitry configured to maintain a buffer in a first mode for each host, of a plurality of hosts, transmitting read/write commands, maintain the buffer in a second mode different from the first mode, in response to a warning indicating that a first host of the plurality of hosts may be infected by ransomware malware, and restore data backed up in the buffer to a storage in response to determining that the first host is infected by the ransomware malware.

According to some example embodiments, a method for restoring data in a storage system includes maintaining a buffer in a first mode for each host, of a plurality of hosts, transmitting read/write commands, maintaining the buffer in a second mode different from the first mode, in response to a warning indicating that a first host of the plurality of hosts may be infected by ransomware malware, and restoring the data backed up in the buffer to a storage in response to determining that the first host is infected by the ransomware malware.

According to some example embodiments, a non-transitory computer-readable storage medium having a computer program recorded thereon, the computer program, when executed by at least one processor, is configured to cause the at least one processor to perform a method including maintaining a buffer in a first mode for each host, of a plurality of hosts, transmitting read/write commands, maintaining the buffer in a second mode different from the first mode, in response to a warning indicating that a first host of the plurality of hosts may be infected by ransomware malware, and restoring the data backed up in the buffer to a storage in response to determining that the first host is infected by the ransomware malware.

At least some of the above and other features of the invention are set out in the claims.

### BRIEF DESCRIPTION OF THE FIGURES

The above and other objects and features of the inventive concepts will become apparent by describing in detail some example embodiments thereof with reference to the accompanying drawings.
FIG. 1 is a diagram of a system to which a storage device is applied, according to example embodiments.
FIG. 2 is an example of a NVMe-over-fabrics (NVMe-oF) storage system according to example embodiments.
FIG. 3 is a flow chart illustrating a method according to example embodiments.
FIG. 4A illustrates an example of inode details of an original file.
FIG. 4B illustrates an example of inode details of a file encrypted by ransomware malware.
FIG. 4C illustrates an example of inode details of a restored file, according to example embodiments.
FIG. 5 is a flow chart illustrating a method according to example embodiments.
FIG. 6 is a graph illustrating an amount of data kept in each buffer in under-warning mode, according to example embodiments.

### DETAILED DESCRIPTION

Below, some example embodiments of the inventive concepts will be described in detail and clearly to such an extent that one skilled in the art easily carries out the inventive concepts. In the following description, specific details such as detailed components and structures are merely provided to assist the overall understanding of some example embodiments of the inventive concepts. Therefore, it should be apparent to those skilled in the art that various changes and modifications of the example embodiments described herein may be made without departing from the scope of the inventive concepts. In addition, the descriptions of well-known functions and structures are omitted for clarity and brevity. In the following drawings or in the detailed description, components may be connected with any other components except for components illustrated in a drawing or described in the detailed description. The terms described in the specification are terms defined in consideration of the functions in the inventive concepts and are not limited to a specific function. The definitions of the terms should be determined based on the contents throughout the specification.

In the detailed description, components that are described with reference to the terms "driver", "block", "unit", etc. will be implemented with software, hardware, or a combination thereof. For example, the software may be a machine code, firmware, an embedded code, and application software. For example, the hardware may include an electrical circuit, an electronic circuit, a processor, a computer, integrated circuit cores, a pressure sensor, an inertial sensor, a micro electro mechanical system (MEMS), a passive element, or a combination thereof.

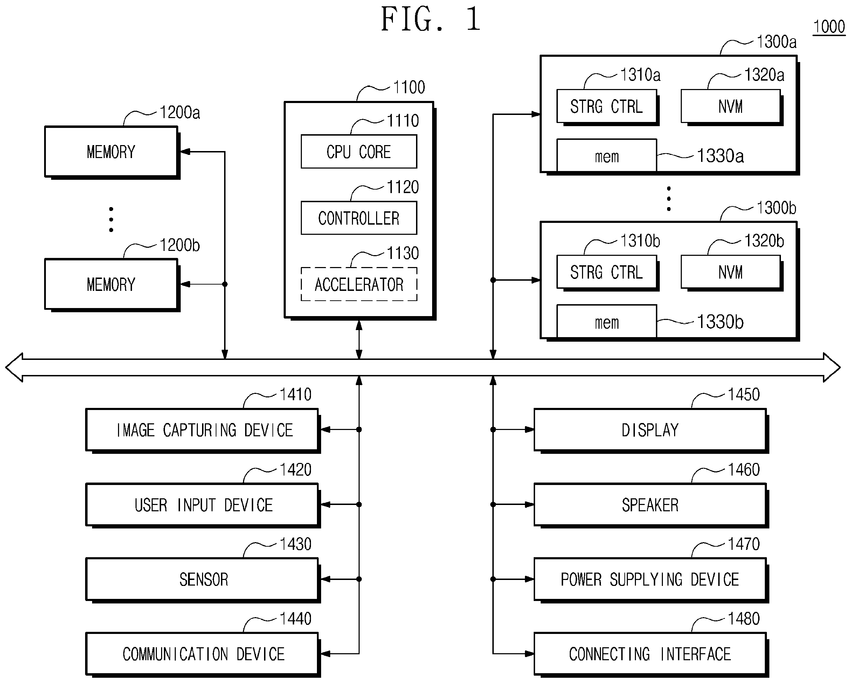

FIG. 1 is a diagram of a system 1000 to which a storage device is applied, according to an embodiment. The system 1000 of FIG. 1 may be a mobile system, such as a portable communication terminal (e.g., a mobile phone), a smartphone, a tablet personal computer (PC), a wearable device, a healthcare device, or an Internet of things (IOT) device. However, the system 1000 of FIG. 1 is not necessarily limited to the mobile system and may be any form of computing system, such as a PC, a laptop computer, a server, a media player, or an automotive device (e.g., a navigation device).

Referring to FIG. 1, the system 1000 may include a main processor 1100, memories (e.g., 1200a and 1200b), and storage devices (e.g., 1300a and 1300b). In addition, the system 1000 may include at least one of an image capturing device 1410, a user input device 1420, a sensor 1430, a communication device 1440, a display 1450, a speaker 1460, a power supplying device 1470, and a connecting interface 1480.

The main processor 1100 may control all operations of the system 1000, more specifically, operations of other components included in the system 1000. The main processor 1100 may be implemented as a general-purpose processor, a dedicated processor, or an application processor.

The main processor 1100 may include at least one central processing unit (CPU) core 1110 and further include a controller 1120 configured to control the memories 1200a and 1200b and/or the storage devices 1300a and 1300b. In some embodiments, the main processor 1100 may further include an accelerator 1130, which is a dedicated circuit for a high-speed data operation, such as an artificial intelligence (AI) data operation. The accelerator 1130 may include a graphics processing unit (GPU), a neural processing unit (NPU) and/or a data processing unit (DPU) and be implemented as one or more chips that are physically separate from the other components of the main processor 1100.

The memories 1200a and 1200b may be used as main memory devices of the system 1000. Although each of the memories 1200a and 1200b may include a volatile memory, such as static random access memory (SRAM) and/or dynamic RAM (DRAM), each of the memories 1200a and 1200b may include non-volatile memory, such as a flash memory, phase-change RAM (PRAM) and/or resistive RAM (RRAM). The memories 1200a and 1200b may be implemented in the same package as the main processor 1100.

The storage devices 1300a and 1300b may serve as non-volatile storage devices configured to store data regardless of whether power is supplied thereto, and have larger storage capacity than the memories 1200a and 1200b. The storage devices 1300a and 1300b may respectively include storage controllers (STRG CTRL) 1310a and 1310b and NVMs (Non-Volatile Memories) 1320a and 1320b configured to store data via the control of the storage controllers 1310a and 1310b. Although the NVMs 1320a and 1320b may include flash memories having a two-dimensional (2D) structure or a three-dimensional (3D) V-NAND structure, the NVMs 1320a and 1320b may include other types of NVMs, such as PRAM and/or RRAM.

The storage devices 1300a and 1300b may be physically separated from the main processor 1100 and included in the system 1000 or implemented in the same package as the main processor 1100. In addition, the storage devices 1300a and 1300b may have a nonvolatile memory NVM 1320a and 1320b. The NVM 1320a and/or 1320b may include types of solid-state devices (SSDs) or memory cards and may be removably combined with other components of the system 100 through an interface, such as the connecting interface 1480 that will be described below. The storage devices 1300a and 1300b may additionally include a volatile memory 1330a and/or 1330b. The memory 1330a and/or 1330b may include non-volatile memory, such as a flash memory, phase-change RAM (PRAM) and/or resistive RAM (RRAM). The storage devices 1300a and 1300b may be devices to which a standard protocol, such as a universal flash storage (UFS), an embedded multi-media card (eMMC), or a non-volatile memory express (NVMe), is applied, without being limited thereto.

The image capturing device 1410 may capture still images or moving images. The image capturing device 1410 may include a camera, a camcorder, and/or a webcam.

The user input device 1420 may receive various types of data input by a user of the system 1000 and include a touch pad, a keypad, a keyboard, a mouse, and/or a microphone.

The sensor 1430 may detect various types of physical quantities, which may be obtained from the outside of the system 1000, and convert the detected physical quantities into electric signals. The sensor 1430 may include a temperature sensor, a pressure sensor, an illuminance sensor, a position sensor, an acceleration sensor, a biosensor, and/or a gyroscope sensor.

The communication device 1440 may transmit and receive signals between other devices outside the system 1000 according to various communication protocols. The communication device 1440 may include an antenna, a transceiver, and/or a modem.

The display 1450 and the speaker 1460 may serve as output devices configured to respectively output visual information and auditory information to the user of the system 1000.

The power supplying device 1470 may appropriately convert power supplied from a battery (not shown) embedded in the system 1000 and/or an external power source, and supply the converted power to each of components of the system 1000.

The connecting interface 1480 may provide connection between the system 1000 and an external device, which is connected to the system 1000 and capable of transmitting and receiving data to and from the system 1000. The connecting interface 1480 may be implemented by using various interface schemes, such as advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

Whilst the embodiment of FIG. 1 shows a system including a display 1450, speaker 1460, sensor 1430, user input device 1420 and image captruting device 1410, these are optional. Accordingly, embodiments need not include one or more of these components.

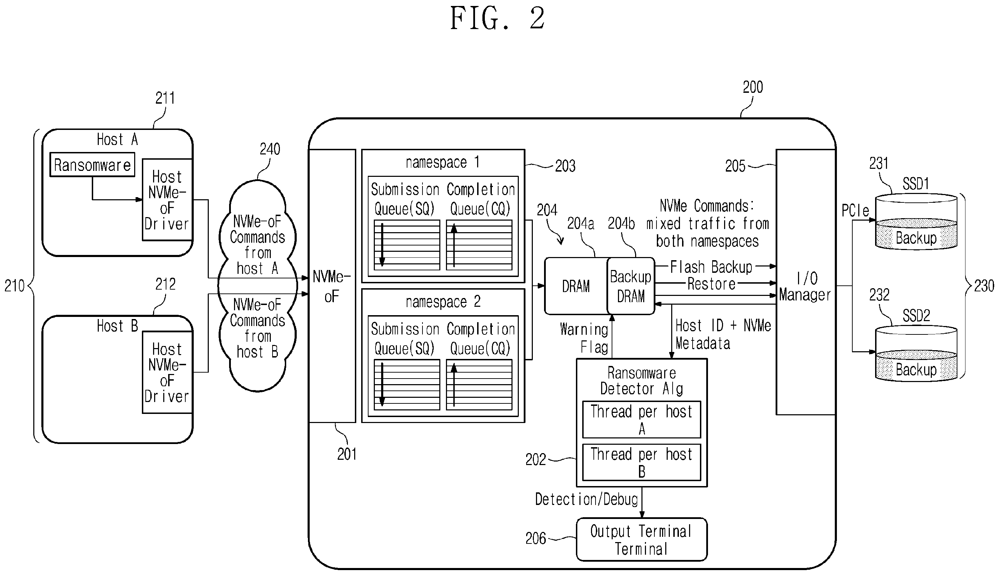

FIG. 2 is an example of a NVMe-over-fabrics (NVMe-oF) storage system according to example embodiments.

Referring to FIG. 2, a NVMe-oF storage system 2000 according to example embodiments includes hosts 210 and a NVMe-oF server 200. For example purposes, FIG. 2 shows two hosts 211, 212. However, example embodiments are not limited thereto and there may be more or fewer hosts 210. Each of the hosts 210 and the NVMe-oF server 200 may be implemented as instances of the system 1000. For example, the hosts 210 may be user devices (e.g., mobile devices, PCs, etc.) and the NVMe-oF server 200 may be a server. FIG. 2 includes one NVMe-oF server 200. However, example embodiments are not limited thereto and a storage system 2000 according to example embodiments may include more than one NVMe-oF server 200.

The hosts 210 may communicate with the NVMe-oF server 200 over a channel 240 (e.g. a communication channel). The channel 240 may be, for example, the Internet. The channel 240 may include, for example, different transport layer technologies such as remote direct memory access (RDMA), ethernet, fibre channel, TCP, etc.

The NVMe-oF server 200 may include a NVMe-oF translation layer 201, a NVMe-oF ransomware detector (RWD) 202, submission and completion queues 203, a memory 204, an I/O manager 205, and/or an output terminal 206. The NVMe-oF translation layer 201, the NVMe-oF ransomware detector 202, and the I/O manager 205 may be implemented by processing circuitry. For example, they may be implemented by main processor 1100. However, example embodiments are not limited thereto and each of the NVMe-oF translation layer 201, the NVMe-oF ransomware detector 202, and/or I/O manager 205 may be standalone chips such as integrated peripherals. The submission queues 203, and/or the completion queues 204 may be implemented by a memory. For example, memory, 1200a. The memory 204 may be implemented as any of memory 1200a, 1200b, etc. For example, the memory 204 may be DRAM memory.

The memory 204 may include a main memory 204a and/or a backup memory 204b. The backup memory 204b may be smaller than the main memory 204a. For example, the backup memory 204b may be 10 gigabytes. However, example embodiments are not limited thereto and the backup memory may be more or less than 10 gigabytes.

The NVMe-oF RWD 202 may be configured to detect a presence of ransomware on a host 210. For example, the NVMe-of RWD 202 may detect the ransomware based on a ransomware I/O pattern. For example, read/write commands may be analyzed for a write-after-read pattern. For example, the NVMe-of RWD 202 may determine a probability of the presence of ransomware on the host based on the analysis of the read/write commands. However, example embodiments are not limited to this example and the NVMe-oF RWD 202 may detect the ransomware according to any known method. The RWD 202 may be configured to output a warning in response to detecting that a ransomware virus may be infecting a host 210, an alert in response to determining that the host 210 is infected with a ransomware virus, and/or a clearance in response to determining that a host 210 is determined not to be infected with a ransomware virus. For example, the NVMe-of RWD 202 may output the warning in response to a determined probability of the presence of ransomware being above a first threshold, may output the altert in response to the determined probability of the presence of the ransomware being above a second threshold higher than the first threshold, and/or may output the clearance in response to the determined probability of the presence of the ransomware being below a third threshold lower than the first threshold. As used herein, the terms ransomware, ransomware virus, and ransomware malware may be used interchangeably. The warning may be issued in response to an initial determinination by the RWD 202 of an increased likelihood or risk that the host 210 is infected. After the warning is issued, the RWD 202 may perform further assessment of the NVMe-oF RWD 202 to determine whether the host 210 is, in fact, infected. The RWD 202 may issue an alert of an updated status based on the determination. The alert may include a true/false message indicating whether it is true or false that the host 210 is infected. If the RWD 202 determines that the host 210 is infected, a confirmation of infection may be issued by the RWD 202. If the RWD 202 determines that the host 210 is not infected, the RWD 202 may issue a confirmation that the host 210 is not infected.

The NVMe-oF server 200 is connected to a plurality of NVMe devices 230. FIG. 2 shows two NVMe devices 231 and 232. However, example embodiments are not limited thereto and there may be more or fewer NVMe devices. Each of the NVMe devices may be devices to which a standard protocol, such as a universal flash storage (UFS), an embedded multi-media card (eMMC), or a non-volatile memory express (NVMe), is applied, without being limited thereto. For example, each of the NVMe devices 230 may be a solid state drive (SSD). NVMe-oF server 200 may communicate with the NVMe devices 230 via the I/O manager 205 using various interface schemes, such as ATA, SATA, e-SATA, SCSI, SAS, PCI, PCIe, NVMe, IEEE 1394, USB, etc.

Each, or at least one, of the NVMe devices 230 may include a reserved storage. In some example embodiments, the reserved storage may be referred to as reserved backup. The reserved storage may be a portion (e.g. a relatively small portion) of the storage included in the NVMe device 230. The capacity of the reserved storage may be smaller than the capacity of the remainder of the NVMe device 230. For example, the reserved storage may be 1/1000 of the total storage of the NVMe device 230. The reserved storage may be inaccessible to the hosts 210 (e.g., may be blocked from user writes) and may be reserved for use during an under-warning mode, described later.

The NVMe-oF storage system 2000 enables sharing NVMe based storage across multiple servers/hosts/CPUs with nearly local disc performance. In the NVMe-oF storage system 2000, the hosts 210 may use the same commands that are used with local NVMe drives. The commands are encapsulated and sent from the hosts 210 via the channel 240 to the NVMe-oF server 200. The NVMe-oF server 200 decapsulates the commands and sends the commands to the NVMe devices 230.

The NVMe-oF storage system 2000 may be used for storage and/or compute disaggregation for improved resource utilization in organizations. The NVMe storage system 2000 may also be used by hyperscalers to offer large storage resources in the form of a cloud platform.

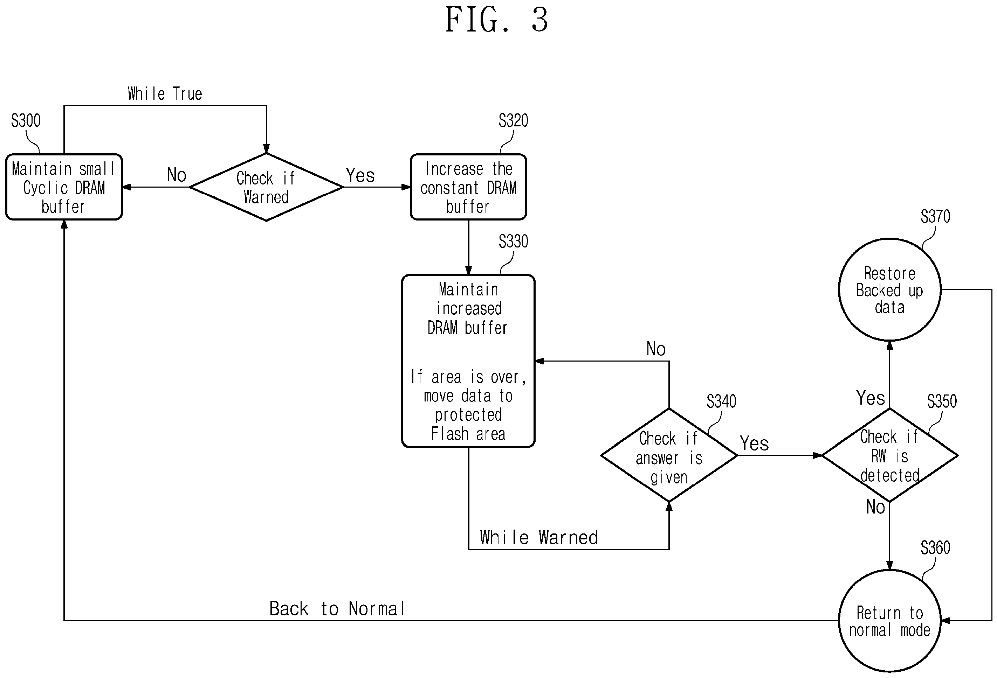

FIG. 3 is a flow chart illustrating a method according to example embodiments.

The method of FIG. 3 may be performed by the NVMe-oF server 200. For example, the method of FIG. 3 may be performed by the processor 1100.

Referring to FIG. 3, at S300 the NVMe-oF server 200 maintains a cyclic buffer (e.g. a small cyclic buffer) for each host 210. For example, the NVMe-oF server 200 may maintain the cyclic buffer in the backup memory 204b. While the NVMe-oF server 200 maintains the cyclic buffer for each host 210, the NVMe-oF server 200 may be referred to as operating in a normal mode. The normal mode maintaining the cyclic buffer will be described in more detail later. The normal mode may also be referred to as a first mode herein.

For example, the backup memory 204b may be 10 gigabytes. However, example embodiments are not limited thereto. The backup memory 204b may be divided evenly among hosts 210 operating in parallel. For example, if the NVMe-oF storage system 2000 includes 10 hosts 210 operating (e.g., sending read/write commands to the NVMe-oF server 200) in parallel (e.g., at the same time), then 1 gigabyte of the 10 gigabytes of backup memory 204b may be allocated as a cyclic buffer for each of the 10 hosts 210.

When the NVMe-oF server 200 is operating in the normal mode, the NVMe-oF server 200 may maintain the cyclic buffer in the backup memory 204b. For example, read commands of the hosts 210 and the associated read data from the NVMe 230 may be backed up in the backup memory 204b in a cyclic manner. For example, in the above example where each host 210 is allocated 1 gigabyte of the backup memory 204b, the last 1 gigabyte of read commands and associated data will be stored in the backup memory 204b for each of the 10 hosts 210. For example, if all of the available capacity (e.g. 1 gigabyte) of backup memory is used, previous read commands and read data will be replaced by subsequent read commands and read data in a first in first out (FIFO) manner.

Additionally, the NVMe-oF server 200 may store a structure for managing metadata of files associated with the read command. In Linux file systems, such a structure is referred to as an inode (an index node). An inode is a datastructure that describes a file-system object such as a file or directory. For convenience, the term inode will be used herein. However, example embodiments are not limited to inodes and/or Linux file systems and any similar structures and/or any file systems may be used. The NVMe-oF server 200 may store the inodes in a dedicated space in the NVMe devices 230. For example, the inodes may be stored in a portion of the reserved storage.

At S310, the NVMe-oF server 200 checks for a warning from the NVMe-oF RWD 202. A warning from the NVMe-oF RWD 202 may indicate a host 210 that is suspected of being infected by ransomware malware.

If there is no warning from the NVMe-oF RWD 204 (No at S310), then the NVMe-oF server 200 proceeds to S300 and continues to operate in normal mode, as discussed herein. If there is a warning from the NVMe-oF RWD 204 (Yes at S310) then the NVMe-oF server 200 proceeds to S320.

At S320, the NVMe-oF server 200 increases the size of the buffer allocated to the host 210 indicated in the warning. Additionally, the NVMe-oF server 200 converts the cyclic buffer to a constant buffer for the host 210 indicated in the warning. The NVMe-oF server 200 may be said to be operating in an under-warning mode (or an alerted mode). The under-warning mode may also be referred to as a second mode herein.

For example, to increase the size of the buffer for the host 210 indicated in the warning, a size of the cyclic buffer of each host 210 not indicated in the warning may be reduced. The reduction in the size of the hosts 210 not indicated in the warning may compensate for the increase in the size of the buffer for the host indicated in the warning, such that the overall storage capacity of the buffers is kept constant. For example, the cyclic buffer of each of the hosts 210 not indicated in the warning may be reduced by 50%. However, example embodiments are not limited thereto and the cyclic buffer of each of the hosts 210 not indicated in the warning may be reduced by greater or less than 50%.

In the example where there are 10 hosts 210 operating in parallel and each host is allocated a 1 gigabyte cyclic buffer in the backup memory 204b, if the NVMe-oF RWD 202 outputs a warning indicating one host 210, then the cyclic data buffer of each of the other 9 hosts 210 may be reduced to .5 gigabytes and the data buffer of the indicated host may be increased to 5.5 gigabytes and converted from a cyclic buffer to a constant buffer.

At S330, the NVMe-oF server 200 continues to maintain the increased DRAM buffer in the under-warning mode. In some example embodiments, the increased DRAM buffer may refer to the data buffer with increased size associated with the host 210 indicated in the warning. In some example embodiments, the increased DRAM buffer may refer to the data buffer converted from the cyclic buffer to the constant buffer. For example, read commands and associated read data of the host 210 indicated in the warning may be stored in the constant buffer.

If the constant buffer for the host 210 indicated in the warning becomes full, subsequent read commands and associated read data may be stored in the NVMe 230 and the previous read commands and associated read data may not be overwritten. For example, as described above, the each, or one or more, of the NVMe 230 may include a reserved storage that is inaccessible to the hosts 210. Subsequent read commands and associated read data for the host 210 indicated in the warning may be stored in the reserved storage of the NVMe 230 when the constant buffer allocated to the host 210 indicated in the warning becomes full. That is, the constant buffer does maintain data stored within the buffer, and does not allow deletion or overwriting of the data stored in the buffer.

At S340, the NVMe-oF server 200 checks for an update from the NVMe-oF RWD 202 on a status of the host 210 indicated in the warning. The update may indicate that the status of the host 210 indicated in the warning is confirmed to be infected by the ransomware malware or that the status of the host 210 indicated in the warning has been determined to not be infected by the ransomware malware. For example, the NVMe-oF RWD 202 may provide the update as a true/false message. If no update is provided (No at S340) then the NVMe-oF server 200 proceeds to S330 and continues as discussed herein. If an update is provided (Yes at S340) then the NVMe-oF server 200 proceeds to S350.

At S350, the NVMe-oF server 200 determines whether ransomware is detected on the host 210 indicated in the warning based on the update provided from the NVMe-oF RWD 202. For example, the NVMe-oF RWD 202 may provide the update as a true/false message. The update may additionally include an approximation of an amount of lost data. If the NVMe-oF server 200 determines that ransomware is not present on the host 210 indicated in the warning (No at S350), then the NVMe-oF server 200 proceeds to S360.

At S360, the NVMe-oF server returns to operating in the normal mode. For example, the NVMe-oF server 200 may clear all of the data stored in the backup memory 204b and the reserved storage in the NVMe 230. The NVMe-oF server 200 may re-allocate the backup memory 204b to the hosts 210 such that each host 210 is allocated an equal amount of the backup memory 204b. In the example where there are 10 hosts 210 and the backup memory 204b is 10 gigabytes, the NVMe-oF server 200 may allocate a 1 gigabyte cyclic buffer to each of the 10 host 210. The buffer for the host 210 that was previously indicated in the warning may be returned to being a cyclic buffer.

The NVMe-oF server 200 then proceeds to S300 and continues as described herein.

Returning to S350, If the NVMe-oF server 200 determines that ransomware is present on the host 210 indicated in the warning (Yes at S350), then the NVMe-oF server 200 proceeds to S370.

At S370, the NVMe-oF server 200 restores data overwritten by the ransomware malware in the NVME 230. For example, according to some example embodiments, the NVMe-oF server 200 may transmit a notification to the host 210 along with the backed up data. For example, the backed up data may include the read commands stored in the constant buffer, the read commands stored in the reserved storage in the NVMe 230, and/or associated inodes.

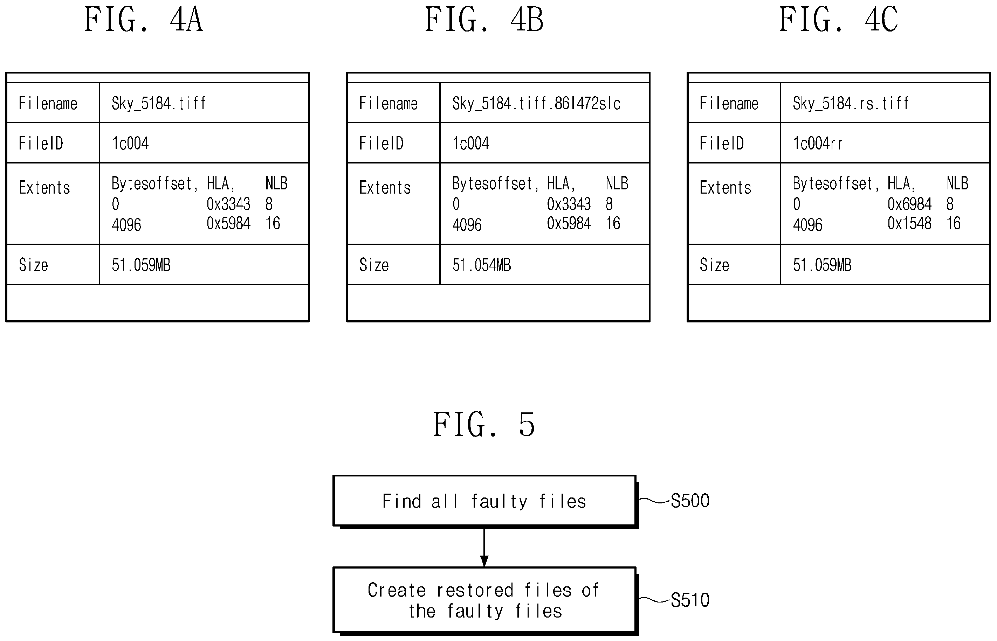

The NVMe-oF server 200 may then ban the infected host 210 from accessing the NVMe-oF server 200. Once the host 210 removes the ransomware malware, the host 210 may notify the NVMe-oF server 200 and be allowed access to the NVMe-oF server 200 once again. The host 210 may then restore the data overwritten by the ransomware malware based on the backed up data, described in more detail below with regard to FIGS. 4-5.

Alternatively, according to some example embodiments, the NVMe-oF server 200 may restore the data by converting the read commands stored in the constant buffer and the read commands stored in the reserved storage in the NVMe 230 to write commands. The NVMe-oF server 200 may then write the data stored in the constant buffer and the reserved storage to the NVMe 230 based on the converted write commands.

The NVMe-oF server 200 then proceeds to S360 and continues as discussed herein.

Therefore, according to example embodiments, data lost due to a ransomware attack in a NVMe-oF system 2000 may be recovered without decreasing latency performance and without using over-writing. For example, because the NVMe-oF system 2000 uses existing memory (e.g., DRAM) to back up data there may be a decreased or limited delay in read performance. Since a ransomware virus may run on a single host 210, the NVMe-oF system 2000 maintains separate cyclic buffers for the read operations of different hosts and only modifies the buffer of the suspected host to a constant buffer. Thus, a smaller DRAM area may be used according to example embodiments.

FIG. 4A illustrates an example of inode details of an original file.

FIG. 4B illustrates an example of inode details of a file encrypted by ransomware malware.

FIG. 4C illustrates an example of inode details of a restored file, according to example embodiments.

Referring to FIG. 4A, an inode may include a filename, a fileID, extents, and/or a file size. The extents may include a Byteoffset, a host logical address (HLA), and/or an NLB.

Referring to FIGS. 4A and 4B, a ransomware malware may modify the inode by changing the suffix of the filename and/or changing the fileID.

In some instances, the ransomware malware does not change the HLA. However, some ransomware may change the HLA as well. As discussed above, according to some example embodiments, inodes associated with read commands may be backed up in the reserved storage to protect from this scenario.

A NVMe driver may convert the HLA to a logical block address (LBA) for storage in the NVMe. For example, the HLA may be the address of the file system of the host 210 and the LBA may be the logical address of the NVMe. A method for converting an HLA to an LBA may depend on the file system. For example, in a standard NVMe, the conversion may be performed as a translation 1 = h/512, where 1 and h are LBA and HLA, respectively. However, example embodiments are not limited thereto and the conversion may be performed according to any known method.

Because ransomware malware writes the encrypted file over the original file, the HLA of the encrypted file will likely be the same as the original file. Accordingly, the LBA of the encrypted file will also likely be the same as the original file. If the HLA of the encrypted file is different from the original file, the backed up inode may be used to restore the encrypted data.

To restore the encrypted data based on the backup data sent from the NVMe-oF server 200, the host 210 may build a new file. For example, referring to FIGS. 4A-4C, as shown in FIG 4C the host 210 may add a different suffix to the name of the original file, create a new FileID, and use a different set of HLAs. Because the HLAs in the new inode are different, the LBA will change and the new file will be saved in a different location than the original file in the NVMe 230.

FIG. 5 is a flow chart illustrating a method according to example embodiments.

The method of FIG. 5 may be performed by the host 210. For example, the method of FIG. 5 may be performed by the processor 1100 of a host 210.

Referring to FIG. 5, at S500 the host 210 finds all faulty files. A faulty file may be a file with at least one LBA included in the read commands of the backed up data.

Because inodes are based on HLAs and read commands are based on LBAs, the host 210 may translate the HLAs of the inodes to a first list of LBAs. For example, the host 210 may translate the HLAs to LBAs according to any known method that is well-defined and can be reverted. For example, the LBA that matches each HLA may be determined when the file is written for the first time. The translation may be done according to the method defined by system, to achieve the same match. The translation method may therefore be defined according the system of the host 210.

The host 210 also creates a second list of LBAs included in the read commands of the backed up data. Then, the host 210 compares the first list with the second list to find inodes that contain addresses included in the read commands of the backed up data.

At S510, the host 210 creates restored files of the faulty files. For each inode found that contains addresses included in the read commands of the backed up data, the host 210 creates a new file based on the inode.

For example, for each inode, the host 210 assigns a new HLA to each HLA in the inode. The host 210 may find one or more free areas in the NVMe 230 to build these new files. More specifically, the host 210 may find free HLAs, which are translated by the NVMe-oF server 200, to a free LBA (e.g., free area in the NVMe 230). The host 210 may use the HLAs of this area as new HLAs. If there is no free area in the NVMe 230, the host 210 may prompt a user to free some area for the recovered files. The host 210 may recover these files one-by-one (e.g., not all of them at the same time). Therefore, the user may have the opportunity to delete encrypted files that are already restored to free area for more restored files.

If the data associated with the HLA was included in the backed up data, then the new HLA is associated with the corresponding backed up data. Otherwise, the new HLA is associated with the same data as the HLA being replaced. In this way, the new inode shown in FIG. 4C is created and the data is restored to the NVMe 230 in a new location based on a new LBA based on the new HLA.

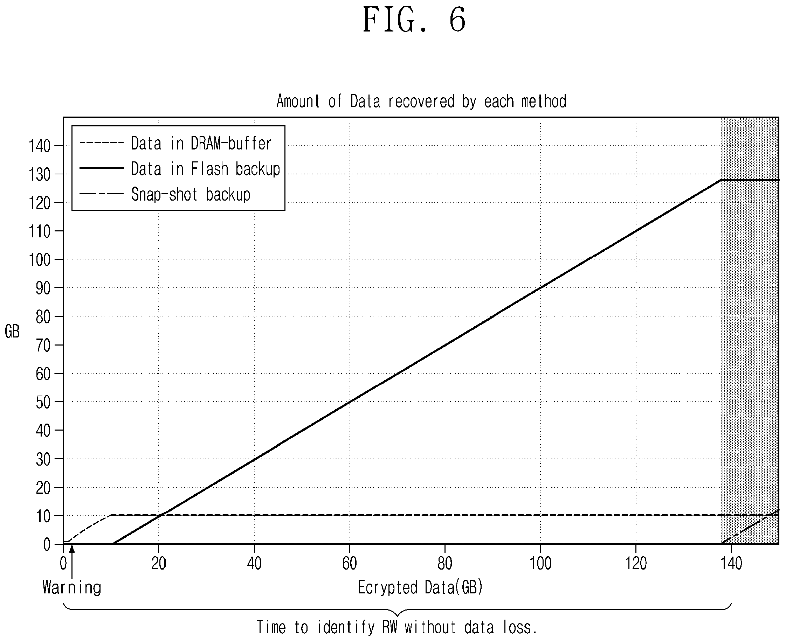

FIG. 6 is a graph illustrating an amount of data kept in each buffer in under-warning mode, according to example embodiments.

Referring to FIG. 6, assuming, for example, the backup memory 204b is 10 gigabytes, a warning flag is given after 0.5 megabytes is encrypted by the ransomware malware, the DRAM backup of the corresponding host is increased to 10 gigabytes, after 10 gigabytes are read, the data is kept in the reserved storage, which is of size 128 gigabytes. The grey area indicates that the data might be lost unless it was kept in an existing snapshot.

One or more of the elements disclosed above may include or be implemented in one or more processing circuitries such as hardware including logic circuits; a hardware/software combination such as a processor executing software; or a combination thereof. For example, the processing circuitries more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

While the inventive concepts have been described with reference to some example embodiments thereof, it will be apparent to those of ordinary skill in the art that various changes and modifications may be made thereto without departing from the scope of the inventive concepts as set forth in the following claims.

## Claims

1. A storage system comprising:
processing circuitry (201, 202, 205) configured to:
maintain a buffer as a cyclic buffer in a first mode for each host, of a plurality of hosts (211, 212), transmitting read/write commands;
maintain the buffer for a first host of the plurality of hosts (211, 212) in a second mode different from the first mode, in response to a warning indicating that the first host may be infected by ransomware malware;
increase a size of the cyclic buffer of the first host in the second mode;
convert the cyclic buffer of the first host to a constant buffer in the second mode, wherein data stored within the constant buffer is maintained and deletion or overwriting of the data stored in the constant buffer is not allowed; and
restore data backed up in the buffer for the first host to a storage in response to determining that the first host is infected by the ransomware malware.

2. The storage system of claim 1, wherein the processing circuitry (201, 202, 205) is further configured to:
clear all data from the buffer for the first host in response to determining that the first host is not infected by the ransomware malware; and
maintain the buffer for the first host in the first mode in response to clearing the data from the buffer.

3. The storage system of claim 1 or claim 2, wherein the processing circuitry (201, 202, 205) is further configured to:
increase the size of the cyclic buffer of the first host by decreasing a size of the cyclic buffer of the other hosts of the plurality of hosts (211, 212).

4. The storage system of any preceding claim, wherein the processing circuitry (201, 202, 205) is further configured to:
back up read commands and read data associated with the read commands for the first host in the constant buffer in the second mode; and
back up the read commands and read data associated with the read commands for the first host in a reserved backup of the storage in response to the constant buffer being full.

5. The storage system of claim 4, wherein the reserved backup is not accessible by the plurality of hosts (211, 212).

6. The storage system of any preceding claim, wherein the processing circuitry (201, 202, 205) is further configured to:
back up read commands and read data associated with the read commands for each host of the plurality of hosts (211, 212) in the respective buffer for each host.

7. The storage system of any of claims 4-6, wherein the processing circuitry (201, 202, 205) is further configured to store a plurality of inodes respectively corresponding with the read data.

8. The storage system of claim 7, wherein the processing circuitry (201, 202, 205) is configured to restore the data backed up in the buffer based on the plurality of inodes.

9. The storage system of claim 7 or claim 8, wherein the processing circuitry (201, 202, 205) is configured to restore the data backed up in the buffer by building a plurality of new files based on the data backed up in the buffer and the plurality of inodes.

10. The storage system of any preceding claim, wherein the processing circuitry (201, 202, 205) is further configured to:
clear the data in the buffer for the first host in the second mode in response to determining that the first host is not infected by ransomware malware; and
maintain the buffer for the first host in the first mode in response to clearing the data in the buffer.

11. The storage system of any preceding claim, wherein the storage system is a non-volatile memory express over-fabrics NVMe-oFstorage system.

12. A computer-implemented method for restoring data in a storage system, the method comprising:
maintaining (S300) a buffer as a cyclic buffer in a first mode for each host, of a plurality of hosts, transmitting read/write commands;
maintaining (S330) the buffer for a first host of the plurality of hosts in a second mode different from the first mode, in response to a warning indicating that the first host may be infected by ransomware malware;
increasing (S320) a size of the cyclic buffer of the first host in the second mode;
converting the cyclic buffer of the first host to a constant buffer in the second mode, wherein data stored within the constant buffer is maintained and deletion or overwriting of the data stored in the constant buffer is not allowed; and
restoring (S370) data backed up in the buffer to a storage in response to determining that the first host is infected by the ransomware malware.

13. The method of claim 12, further comprising:
clearing all data from the buffer for the first host in response to determining that the first host is not infected by the ransomware malware; and
maintaining the buffer for the first host in the first mode in response to clearing the data from the buffer for the first host.

## Patentansprüche

1. Speichersystem, umfassend:
eine Verarbeitungsschaltung (201, 202, 205), die für Folgendes konfiguriert ist:
Aufrechterhalten eines Puffers als einen zyklischen Puffer in einem ersten Modus für jeden Host, aus einer Vielzahl von Hosts (211, 212) der Lese/Schreib-Befehle überträgt;
Aufrechterhalten des Puffers für einen ersten Host der Vielzahl von Hosts (211, 212) in einem zweiten Modus, der sich vom ersten Modus unterscheidet, infolgedessen, dass eine Warnung anzeigt, dass der erste Host mit Ransomware-Malware infiziert sein könnte;
Erhöhen einer Größe des zyklischen Puffers des ersten Hosts im zweiten Modus;
Umwandeln des zyklischen Puffers des ersten Hosts zu einem konstanten Puffer in dem zweiten Modus, wobei in dem konstanten Puffer gespeicherte Daten aufrechterhalten werden und ein Löschen oder Überschreiben der in dem konstanten Puffer gespeicherten Daten nicht zulässig ist; und
Wiederherstellen von in dem Puffer gesicherten Daten für den ersten Host in einen Speicher, infolgedessen, dass bestimmt wird, dass der erste Host von der Ransomware-Malware infiziert ist.

2. Speichersystem nach Anspruch 1, wobei die Verarbeitungsschaltung (201, 202, 205) weiter für Folgendes konfiguriert ist:
Löschen aller Daten aus dem Puffer für den ersten Host, infolgedessen, dass bestimmt wird, dass der erste Host nicht von der Ransomware-Malware infiziert ist; und
Aufrechterhalten des Puffers für den ersten Host im ersten Modus, infolgedessen, dass die Daten aus dem Puffer gelöscht werden.

3. Speichersystem nach Anspruch 1 oder Anspruch 2, wobei die Verarbeitungsschaltung (201, 202, 205) weiter für Folgendes konfiguriert ist:
Erhöhen der Größe des zyklischen Puffers des ersten Hosts, indem eine Größe des zyklischen Puffers der anderen Hosts der Vielzahl von Hosts (211, 212) verringert wird.

4. Speichersystem nach einem vorstehenden Anspruch, wobei die Verarbeitungsschaltung (201, 202, 205) weiter für Folgendes konfiguriert ist:
Sichern von Lesebefehlen und mit den Lesebefehlen verknüpften Lesedaten für den ersten Host in dem konstanten Puffer in dem zweiten Modus; und
Sichern der Lesebefehle und der mit den Lesebefehlen verknüpften Lesedaten für den ersten Host in einer reservierten Sicherung des Speichers, infolgedessen, dass der konstante Puffer voll ist.

5. Speichersystem nach Anspruch 4, wobei die reservierte Sicherung für die Vielzahl von Hosts (211, 212) nicht zugänglich ist.

6. Speichersystem nach einem vorstehenden Anspruch, wobei die Verarbeitungsschaltung (201, 202, 205) weiter für Folgendes konfiguriert ist:
Sichern von Lesebefehlen und mit den Lesebefehlen verknüpften Lesedaten für jeden Host der Vielzahl von Hosts (211, 212) in dem jeweiligen Puffer für jeden Host.

7. Speichersystem nach einem der Ansprüche 4-6, wobei die Verarbeitungsschaltung (201, 202, 205) ferner dazu konfiguriert ist, eine Vielzahl von Inodes zu speichern, die jeweils den gelesenen Daten entsprechen.

8. Speichersystem nach Anspruch 7, wobei die Verarbeitungsschaltung (201, 202, 205) dazu konfiguriert ist, die im Puffer gesicherten Daten basierend auf der Vielzahl von Inodes wiederherzustellen.

9. Speichersystem nach Anspruch 7 oder Anspruch 8, wobei die Verarbeitungsschaltung (201, 202, 205) dazu konfiguriert ist, die im Puffer gesicherten Daten durch eine Erstellung einer Vielzahl neuer Dateien basierend auf den in dem Puffer und der Vielzahl von Vielzahl von Inodes gesicherten Daten wieder herzustellen.

10. Speichersystem nach einem vorstehenden Anspruch, wobei die Verarbeitungsschaltung (201, 202, 205) weiter für Folgendes konfiguriert ist:
Löschen der Daten in dem Puffer für den ersten Host im zweiten Modus, infolgedessen, dass bestimmt wird, dass der erste Host nicht von der Ransomware-Malware infiziert ist; und
Aufrechterhalten des Puffers für den ersten Host im ersten Modus, infolgedessen, dass die Daten in dem Puffer gelöscht werden.

11. Speichersystem nach einem vorstehenden Anspruch, wobei das Speichersystem ein Non-volatile Memory Express Over-Fabrics NVMe-oF-Speichersystem ist.

12. Computerimplementiertes Verfahren zum Wiederherstellen von Daten in einem Speichersystem, wobei das Verfahren Folgendes umfasst:
Aufrechterhalten (S300) eines Puffers als einen zyklischen Puffer in einem ersten Modus für jeden Host, aus einer Vielzahl von Hosts der Lese/Schreib-Befehle überträgt;
Aufrechterhalten (S330) des Puffers für einen ersten Host der Vielzahl von Hosts in einem zweiten Modus, der sich vom ersten Modus unterscheidet, infolgedessen, dass eine Warnung anzeigt, dass der erste Host mit Ransomware-Malware infiziert sein könnte;
Erhöhen (S320) einer Größe des zyklischen Puffers des ersten Hosts im zweiten Modus;
Umwandeln des zyklischen Puffers des ersten Hosts zu einem konstanten Puffer in dem zweiten Modus, wobei in dem konstanten Puffer gespeicherte Daten aufrechterhalten werden und ein Löschen oder Überschreiben der in dem konstanten Puffer gespeicherten Daten nicht zulässig ist; und
Wiederherstellen (S370) von in dem Puffer gesicherten Daten in einen Speicher, infolgedessen, dass bestimmt wird, dass der erste Host von der Ransomware-Malware infiziert ist.

13. Verfahren nach Anspruch 12, ferner umfassend:
Löschen aller Daten aus dem Puffer für den ersten Host, infolgedessen, dass bestimmt wird, dass der erste Host nicht von der Ransomware-Malware infiziert ist; und
Aufrechterhalten des Puffers für den ersten Host im ersten Modus, infolgedessen, dass die Daten aus dem Puffer für den ersten Host gelöscht werden.

## Revendications

1. Système de stockage comprenant :
des circuits de traitement (201, 202, 205) configurés pour :
maintenir une mémoire tampon comme une mémoire tampon cyclique dans un premier mode pour chaque hôte, parmi une pluralité d'hôtes (211, 212), transmettant des commandes de lecture/d'écriture ;
maintenir la mémoire tampon pour un premier hôte parmi la pluralité d'hôtes (211, 212) dans un second mode différent du premier mode, en réponse à un avertissement indiquant que le premier hôte peut être infecté par un logiciel malveillant de type rançongiciel ;
augmenter la taille de la mémoire tampon cyclique du premier hôte dans le second mode ;
convertir la mémoire tampon cyclique du premier hôte en une mémoire tampon constante dans le second mode, dans lequel les données stockées dans la mémoire tampon constante sont conservées et la suppression ou l'écrasement des données stockées dans la mémoire tampon constante n'est pas autorisé(e) ; et
restaurer des données sauvegardées dans la mémoire tampon pour le premier hôte sur un support de stockage en réponse à la détermination que le premier hôte est infecté par le logiciel malveillant de type rançongiciel.

2. Système de stockage selon la revendication 1, dans lequel les circuits de traitement (201, 202, 205) sont configurés en outre pour :
effacer toutes les données de la mémoire tampon pour le premier hôte en réponse à la détermination que le premier hôte n'est pas infecté par le logiciel malveillant de type rançongiciel ; et
maintenir la mémoire tampon pour le premier hôte dans le premier mode en réponse à l'effacement des données de la mémoire tampon.

3. Système de stockage selon la revendication 1 ou la revendication 2, dans lequel les circuits de traitement (201, 202, 205) sont configurés en outre pour :
augmenter la taille de la mémoire tampon cyclique du premier hôte en diminuant la taille de la mémoire tampon cyclique des autres hôtes parmi la pluralité d'hôtes (211, 212).

4. Système de stockage selon une quelconque revendication précédente, dans lequel les circuits de traitement (201, 202, 205) sont configurés en outre pour :
sauvegarder des commandes de lecture et des données de lecture associées aux commandes de lecture pour le premier hôte dans la mémoire tampon constante dans le second mode ; et
sauvegarder les commandes de lecture et les données de lecture associées aux commandes de lecture pour le premier hôte dans une sauvegarde réservée du support de stockage en réponse au fait que la mémoire tampon constante est pleine.

5. Système de stockage selon la revendication 4, dans lequel la sauvegarde réservée n'est pas accessible par la pluralité d'hôtes (211, 212).

6. Système de stockage selon une quelconque revendication précédente, dans lequel les circuits de traitement (201, 202, 205) sont configurés en outre pour :
sauvegarder des commandes de lecture et des données de lecture associées aux commandes de lecture pour chaque hôte parmi la pluralité d'hôtes (211, 212) dans la mémoire tampon respective pour chaque hôte.

7. Système de stockage de l'une quelconque des revendications 4-6, dans lequel les circuits de traitement (201, 202, 205) sont configurés en outre pour stocker une pluralité d'inodes correspondant aux données de lecture.

8. Système de stockage selon la revendication 7, dans lequel les circuits de traitement (201, 202, 205) sont configurés pour restaurer les données sauvegardées dans la mémoire tampon en fonction de la pluralité d'inodes.

9. Système de stockage selon la revendication 7 ou la revendication 8, dans lequel les circuits de traitement (201, 202, 205) sont configurés pour restaurer les données sauvegardées dans la mémoire tampon en construisant une pluralité de nouveaux fichiers en fonction des données sauvegardées dans la mémoire tampon et de la pluralité d'inodes.

10. Système de stockage selon une quelconque revendication précédente, dans lequel les circuits de traitement (201, 202, 205) sont configurés en outre pour :
effacer les données de la mémoire tampon pour le premier hôte dans le second mode en réponse à la détermination que le premier hôte n'est pas infecté par un logiciel malveillant de type rançongiciel ; et
maintenir la mémoire tampon pour le premier hôte dans le premier mode en réponse à l'effacement des données dans la mémoire tampon.

11. Système de stockage selon une quelconque revendication précédente, dans lequel le système de stockage est un système de stockage non-volatile memory express over-fabrics NVMe-oF.

12. Procédé mis en œuvre par ordinateur pour restaurer des données dans un système de stockage, le procédé comprenant :
le maintien (S300) d'une mémoire tampon comme une mémoire tampon cyclique dans un premier mode pour chaque hôte, parmi une pluralité d'hôtes, transmettant des commandes de lecture/d'écriture ;
le maintien (S330) de la mémoire tampon pour un premier hôte parmi la pluralité d'hôtes dans un second mode différent du premier mode, en réponse à un avertissement indiquant que le premier hôte peut être infecté par un logiciel malveillant de type rançongiciel ;
l'augmentation (S320) de la taille de la mémoire tampon cyclique du premier hôte dans le second mode ;
la conversion de la mémoire tampon cyclique du premier hôte en une mémoire tampon constante dans le second mode, dans lequel les données stockées dans la mémoire tampon constante sont conservées et la suppression ou l'écrasement des données stockées dans la mémoire tampon constante n'est pas autorisé(e) ; et
la restauration (S370) des données sauvegardées dans la mémoire tampon sur un support de stockage en réponse à la détermination que le premier hôte est infecté par le logiciel malveillant de type rançongiciel.

13. Procédé selon la revendication 12, comprenant en outre :
l'effacement de toutes les données de la mémoire tampon pour le premier hôte en réponse à la détermination que le premier hôte n'est pas infecté par le logiciel malveillant de type rançongiciel ; et
le maintien de la mémoire tampon pour le premier hôte dans le premier mode en réponse à l'effacement des données de la mémoire tampon pour le premier hôte.
